# EUROPEAN PATENT SPECIFICATION

(11) **EP 0 757 761 B1**
(45) Date of publication and mention of the grant of the patent: **24.10.2001**
(21) Application number: 94921192.4
(22) Date of filing: 13.05.1994
(51) Int. Cl.: F16D 67/04

(54) **PRESS DRIVE WITH OIL SHEAR CLUTCH/BRAKE DRIVES**
PRESSENANTRIEB MIT IN ÖLBAD LAUFENDER KUPPLUNGS-BREMSKOMBINATION
ENTRAINEMENT DE PRESSE DOTE D'UNE COMBINAISON EMBRAYAGE/FREIN A L'HUILE

(43) Date of publication of application: 12.02.1997
(73) Proprietor: Midwest Brake Bond Co., Warren, MI 48089 (US)
(72) Inventor: SOMMER, Gordon, M., Grosse Pointe Shores, MI 48236 (US)
(74) Representative: Price, Nigel John King
(86) International application number: US9405508
(87) International publication number: WO9531651

(56) References cited:
- EP-A- 0 051 684
- US-A- 2 848 082
- US-A- 3 946 840
- US-A- 4 095 523
- US-A- 4 346 796
- US-A- 4 562 907

## Description

The present invention relates to press drives. More particularly the present invention relates to a single speed press drive using an oil shear clutch unit disposed on one side of a flywheel and an oil shear brake unit disposed on the opposite side of the flywheel.

Dry friction clutch/brakes depend upon the rubbing of a dry friction material against dry reaction members to start and stop a press. This continuous rubbing causes wearing of both the friction material and the reaction members as well as causing the generation of heat in these members. The faster the press operates and the faster the flywheel rotates, the greater is the amount of wear and heat which are generated. This generation of wear and heat requires periodic gap adjustment between the friction plates and the reaction members to keep the press operating correctly. The trip rate or cycle speed of a press equipped with a dry friction clutch/brake unit is limited because the mass of the unit determines its heat dissipation capacity. If the mass of the unit is increased to increase its heat dissipation capacity, the inertia that must be started and stopped is also increased. These factors define a closed loop from which it is impossible to escape when trying to increase the performance of the system.

Oil shear brake and clutch units have been developed to eliminate the problems associated with the dry friction type of units. The oil shear systems use hydraulic actuation instead of air actuation and the units have been developed with key modules which can be easily adapted to be mated with the various types of presses. Properly designed oil shear clutch/brake drives offer the advantage of little or no wear of plates in the disk stacks and no brake fade. This provides a more precise operation of the press and dramatically increases press up-time. The oil film between the adjacent disks carries the heat generated by the start-stops of the unit away from the disk stacks. This removal of heat offers the advantage that there is now no practical limit in the press trip rate and the flywheel speed. In addition, this removal of heat provides unlimited inching capabilities.

While these oil shear clutch/brake drive units have significantly improved the operation of the units, they have all been supplied as single units which have the clutch and brake units interfaced using various techniques for the engagement and disengagement of the clutch and for the application and release of the brake. One problem associated with these prior art oil shear clutch/brake drives has been the coordination between the operation of the brake unit and the operation of the clutch unit. Accordingly, what is needed is a press drive system which incorporates the flexibility to be applied to a wider variety of presses where size and performance are of the utmost importance. In addition, the press drive system should simplify the coordination and operation of the brake and clutch units.

US-A-4 095 523 discloses a dry friction clutch/brake unit for a press. The brake is arranged to be released when the clutch is engaged and the clutch is arranged to be disengaged when the brake is applied. The clutch and the brake are pneumatically actuated. To disengage the brake and engage the clutch, air under pressure is introduced into a brake cylinder and a clutch cylinder. This acts to move a brake piston so as to compress the brake springs to release the pressure normally exerted by the springs on brake lining disks through a brake pressure plate. A clearance is thereby established between the brake lining disks and the brake pressure plates, enabling the disks to rotate with a main shaft. Simultaneously, the introduction of pressurized air into a clutch cylinder causes a clutch piston to be urged to overcome clutch springs and to cause clutch disks to engage clutch aligning disks. Because the clutch disks are mounted to the flywheel, when the clutch is engaged and the brake released, the flywheel rotation is transmitted through the clutch lining disks to the main drive shaft. The reverse procedure occurs when air is exhausted from the clutch and brake cylinders, whereupon the brake becomes engaged and the clutch becomes disengaged.

EP-A-0 051 684 discloses a control arrangement for a clutch/brake of a press.
Actuation of the clutch and brake relies on the same cylinder and piston.

US-A-3 946 840 discloses a clutch and brake assembly in which hydraulic fluid is circulated through each of the clutch and the brake from a common source. The clutch and brake assembly is intended to be mounted directly within the hub of a rotating member, such as for example a rotatable flywheel or the like.

According to a first aspect of the present invention there is provided an apparatus in combination with an oil shear clutch unit and an oil shear brake unit;
said oil shear brake unit being disposed on a first side of a flywheel of said apparatus, said oil shear brake unit comprising:
   support means for securing said brake unit to a non-rotatable member of said apparatus;
   input means for receiving rotary motion from said apparatus, said input means rotatable with respect to said support means;
   selectively operable brake means for prohibiting rotation of said input means, said brake means including a plurality of interleaved first friction disks alternately splined, respectively, to said support means and said input means, said brake means being movable between an applied condition and a released condition; and
   a brake biasing member for providing a first load for urging said brake means into said applied condition, said brake means defining a brake chamber for accepting a pressurized fluid to overcome said first load and move said brake means into said released condition;
said oil shear clutch unit being disposed on a second side of said flywheel of said apparatus, said oil shear clutch unit comprising;
   means for anchoring said clutch unit to said flywheel of said apparatus;
   output means for receiving rotary motion from said flywheel, said output means rotatable with said input means of said oil shear brake unit;
   selectively operable clutch means for transmitting rotational motion of said anchoring means to said output means of said oil shear clutch unit, said clutch means including a plurality of interleaved second friction disks alternately splined, respectively, to said anchoring means and said output means, said clutch means being movable between a disengaged condition and an engaged condition; and
   a clutch biasing member for providing a second load for urging said clutch means into said disengaged condition, said second load being generally equal to said first load, said clutch means defining a clutch chamber for accepting said pressurized fluid to overcome said second load and move said clutch means into said engaged condition, said clutch chamber having dimensions generally equal to said brake chamber;
   wherein said clutch chamber is separate from said brake chamber.

According to the second aspect of the present invention there is provided a combination oil shear clutch unit and brake unit;
support means for securing said brake unit to a relatively non-rotatable member;
shaft means for transmitting rotary motion;
selectively operable brake means including a plurality of interleaved first friction disks for resisting rotation between said shaft means and said support means, said brake means being movable between an applied condition and a released condition;
a brake biasing member for providing a first load for urging said brake means into said applied condition, said brake means defining a brake chamber for accepting a pressurized fluid to overcome said first load and move said brake means into said released condition;
means for supporting said clutch unit in operative association with a flywheel;
selectively operable clutch means including a plurality of interleaved second friction disks for operatively connecting said flywheel with said shaft means, said clutch means being movable between a disengaged condition and an engaged condition; and
a clutch biasing member for providing a second load for urging said clutch means into said disengaged condition, said second load being generally equal to said first load, said clutch means defining a clutch chamber for accepting said pressurized fluid to overcome said second load and move said clutch means into said engaged condition, said clutch chamber having dimensions generally equal to said brake chamber;
wherein said clutch chamber is separate from said brake chamber.

The present invention provides the art with a press drive system which uses an oil shear brake and an oil shear clutch drive. The clutch system of the present invention uses a disk stack of multiple disks and is located on one side of a flywheel. The brake system of the present invention also uses a disk stack of multiple disks and is located on the opposite side of the flywheel. The oil shear system of the present invention utilizes all the advantages associated with the oil shear technology while the separation of the brake and clutch units and placing them on opposite sides of the flywheel minimizes the amount of space required for the unit on any single side of the flywheel. This combination provides a unique oil shear clutch/brake unit which can be assembled to any press drive system utilizing a minimum amount of space. In addition, the separation of the two units provides the flexibility to design into the units the coordination between the operation of the brake unit and the operation of the clutch unit.

Other advantages of the present invention will become apparent to those skilled in the art from the subsequent detailed description, appended claims and drawings.

In the drawings which illustrate the best mode presently contemplated for carrying out the present invention:

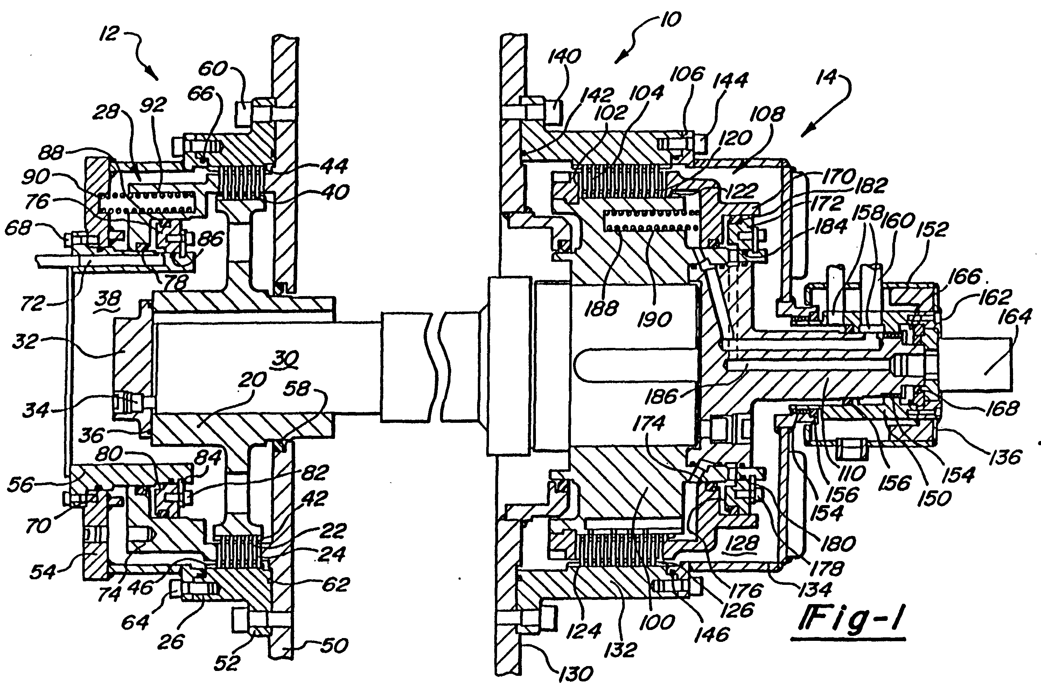

Figure 1 is a side view, partially in cross section, of a brake and clutch unit in accordance with the present invention located on opposite sides of a flywheel.

Referring now to the drawing there is shown in Figure 1 a brake and clutch unit in accordance with the present invention which is designated generally by the reference numeral 10. The embodiment described below is being described for exemplary purposes only. The unique brake and clutch assemblies of the present invention can be incorporated into other designs of press drives if desired.

Referring now to Figure 1, the clutch/brake apparatus 10 includes a separate brake assembly 12 and a clutch assembly 14. Brake assembly 12 includes a brake reaction hub 20, a plurality of brake friction plates 22, a plurality of brake reaction plates 24, a brake housing assembly 26 and a brake engagement assembly 28. Brake reaction hub 20 is drivingly connected to a drive shaft 30 of the press to which clutch/brake apparatus 10 is being attached. An end cap 32 is fixedly secured to drive shaft 30 using a plurality of bolts 34. A seal 36 disposed between hub 20 and end cap 32 helps to maintain an oil tight chamber 38 within housing assembly 26 as will be described later herein. Chamber 38 is supplied with cooling oil for oil shear brake assembly 12 by methods known well in the art.

The plurality of brake friction plates 22 have spline means 40 located on their interior surface for engagement with spline means 42 disposed on the exterior of hub 20. This spline engagement between plates 22 and hub 20 is such that plates 22 and hub 20 will rotate together but plates 22 are allowed to move axially along spline means 42. Interjected or interleaved between the plurality of brake friction plates 22 are the plurality of brake reaction plates 24. Brake reaction plates 24 have spline means 44 located on their exterior surface for the engagement with spline means 46 disposed on the interior of housing assembly 26. The engagement between plates 24 and housing assembly 26 is such that plates 24 are prohibited from rotating with respect to housing assembly 26 but plates 24 are allowed to move axially along spline means 46 of housing assembly 26.

Housing assembly 26 in conjunction with drive shaft 30 defines chamber 38. Housing assembly 26 includes a gearcase adapter plate 50, a brake reaction member 52, a housing cover 54 and a housing cap 56. Adapter plate 50 is fixedly secured to a stationary member of the press (not shown) or any other non-moving member adjacent to the press. A seal 58 located between adapter plate 50 and drive shaft 30 maintains the oil tightness of chamber 38. Brake reaction member 52 is fixedly and sealingly secured to adapter plate 50 with a plurality of bolts 60 or by other means known well in the art. A seal 62 between plate 50 and reaction member 52 maintains the oil tightness of chamber 38. Reaction member 52 includes spline means 46, and positions spline means 46 generally co-axial with spline means 44 such that plates 24 and plates 22 are positioned in their interleaved relationship. Housing cover 54 is fixedly and sealingly secured to reaction member 52 using a plurality of bolts 64 or by other means known well in the art. A seal 66 between cover 54 and reaction member 52 maintains the oil tightness of chamber 38. For exemplary purposes, housing cover 54 is shown in Figure 1 as being comprised of multiple pieces welded together. Housing cap 56 is fixedly and sealing secured to cover 54 by a plurality of bolts 68. A seal 70 between cap 56 and cover 54 maintains the oil tightness of chamber 38. For exemplary purposes, housing cap 56 is shown in Figure 1 as being a multiple piece assembly. A fluid passage 72 extends through housing cap 56 to provide for the application and release of brake assembly 12 as will be described later herein.

Brake engagement assembly 28 is disposed within sealed chamber 38 defined by housing assembly 26 and driveshaft 30. Brake engagement assembly 28 comprises an application member 74 and an annular stationary plate 76. Application member 74 is slidingly received over housing cover 56 and moves axially along cover 56 in order to apply or release brake assembly 12. A seal 78 is disposed between cover 56 and application member 74 in order to isolate an activation chamber 80 from chamber 38. Stationary plate 76 is disposed between cover 56 and application member 74, and with member 74 and cover 56 define chamber 80. Stationary plate 76 is fixedly secured to cover 56 using a plurality of bolts 82 and a plurality of retainers 84. A seal 86 is disposed between plate 76 and cover 56 to isolate chamber 80 from chamber 38. A second seal 88 is disposed between plate 76 and application member 74 to complete the isolation of chamber 80 from chamber 38. Chamber 80 is isolated from chamber 38 with the only access to chamber 80 being through passage 72. A plurality of coil springs 90 are disposed within a plurality of bores 92 extending into application member 74. Springs 90 extend between housing cover 54 and application member 74 in order to urge brake assembly 12 into the engaged condition.

The operation of brake assembly 12 begins with brake assembly 12 being in the engaged condition due to the biasing of application member 74 by the plurality of coil springs 90. Application member 74 compresses the plurality of friction plates 22 and the plurality of reaction plates 24 together and against adapter plate 50. In this engaged position, rotation of driveshaft 30 is prohibited by the fact that brake reaction hub 20, which is locked to driveshaft 30, is locked to adapter plate 50 which is in turn secured to a stationary member. When it is desired to release brake assembly 12, fluid under pressure is supplied to chamber 80 through passage 72. Pressurized fluid within chamber 80 causes application member 74 to move axially to the left as shown in Figure 1 against the biasing of coil springs 90. When application member 74 moves to the left, the compression between the plurality of friction and reaction plates 22 and 24, respectively, is released and plates 22 are free to rotate relative to plates 24 which allows driveshaft 30 to rotate. When the pressurized fluid is released from chamber 80, brake assembly 12 is urged into its applied condition due to the biasing of coil springs 90.

Clutch assembly 14 includes a clutch reaction hub 100, a plurality of clutch friction plates 102, a plurality of clutch reaction plates 104, a clutch housing assembly 106 and a clutch engagement assembly 108. Clutch reaction hub 100 is drivingly connected to drive shaft 30 of the press to which clutch/brake apparatus 10 is being attached. An end cap 110 is fixedly secured to driveshaft 30 using a plurality of bolts 112. End cap 110 extends through clutch housing assembly 106 to provide access for the attachment of the various fluid lines required for the operation of clutch/brake assembly 10 as will be described later herein.

The plurality of clutch friction plates 102 have spline means 120 located on their interior surface for the engagement with spline means 122 located on the exterior surface of hub 100. This spline engagement between plates 102 and hub 100 is such that plates 102 and hub 100 will rotate together but plates 102 are allowed to move axially along spline means 122. Interjected or interleaved between the plurality of clutch friction plates 102 are the plurality of clutch reaction plates 104. Clutch reaction plates 104 have spline means 124 located on their exterior surface for the engagement with spline means 126 disposed on the interior of housing assembly 106. The engagement between plates 104 and housing assembly 106 is such that plates 104 are prohibited from rotating with respect to housing assembly 106 but plates 104 are allowed to move axially along spline means 126 of housing assembly 126.

Housing assembly 126 in conjunction with driveshaft 30 defines a sealed chamber 128. Housing assembly 106 includes a flywheel adapter plate 130, a clutch reaction member 132, a housing cover 134 and a housing cap assembly 136. Adapter plate 130 is fixedly secured to a flywheel 138 of the press to which brake/clutch assembly 10 is being attached. Clutch reaction member 132 is fixedly and sealingly secured to adapter plate 130 by a plurality of bolts 140 or by other means known well in the art. A seal 142 between plate 130 and reaction member 132 maintains the oil tightness of chamber 128. Reaction member 132 includes spline means 126, and positions spline means 126 generally co-axial with spline means 124 such that plates 104 and plates 102 are positioned in their interleaved relationship. Housing cover 134 is fixedly and sealingly secured to reaction member 132 using a plurality of bolts 144 or by other means known well in the art. A seal 146 between cover 134 and reaction member 132 maintains the oil tightness of chamber 128. For exemplary purposes, housing cover 134 is shown in Figure 1 as being comprised of multiple pieces welded together.

Housing cap assembly 136 is rotatably supported by end cap 110 of clutch reaction member 100 and comprises a center hub 150 for interfacing with end cap 110 and a protective cover 152. Center hub 150 is rotatably supported on end cap 110 by a pair of bearings 154. A pair of seals 156 maintain the oil tightness of chamber 128. A pair of ports 158 extend through center hub 150 to provide for the attachment of fluid lines 160 which allow for the entrance and exit of oil to oil shear clutch assembly 14. Protective cover 152 is fixedly secured to center hub 150 by a plurality of bolts 162 or by other means known well in the art. Cover 152 provides for the connection of a fluid line 164 for the engagement and release of clutch assembly 14 as will be described later herein. A seal 166 located between cover 152 and center hub 150, and a seal 168 located between cover 152 and end cap 110 maintain the oil tightness of chamber 128.

Clutch engagement assembly 108 is disposed within sealed chamber 128 defined by housing 106 and driveshaft 30. Clutch engagement assembly 108 comprises an application member 170 and an annular stationary plate 172. Application member 170 is slidingly received over hub 100 and moves axially along hub 100 in order to engage and release clutch assembly 14. A seal 174 is disposed between hub 100 and application member 170 in order to isolate an activation chamber 176 from chamber 128. Stationary plate 172 is disposed between hub 100 and application member 170, and with member 170 and hub 100 define chamber 176. Stationary plate 172 is fixedly secured to hub 100 using a plurality of bolts 178 and a plurality of retainers 180. A seal 182 is disposed between plate 172 and hub 100 to isolate chamber 176 from chamber 128. A second seal 184 is disposed between plate 172 and application member 170 to complete the isolation of chamber 176 from chamber 128. Chamber 176 is isolated from chamber 128 with the only access to chamber 176 being through a passage 186 extending through end cap 110 to connect chamber 176 with fluid line 164 which extends through cover 152. A plurality of coil springs 188 are disposed within a plurality of bores 190 extending into hub 100. Springs 188 extend between hub 100 and application member 170 in order to urge clutch assembly 14 into a released condition.

The operation of clutch assembly 14 begins with clutch assembly 14 being in the released condition due to the biasing of application member 170 by the plurality of coil springs 188 to cause application member 170 to move away from friction plates 102 and reaction plates 104. In this released position, flywheel 138 is free to rotate with respect to driveshaft 30 due to the fact that the plurality of friction plates 102 are free to rotate relative to the plurality of reaction plates 104. When it is desired to power driveshaft 30 by flywheel 138, fluid under pressure is supplied to chamber 176 through passage 186. Pressurized fluid within chamber 176 causes application member 170 to move axially to the left as shown in Figure 1 against the biasing of coil springs 188. When application member 170 moves to the left, the plurality of friction plates 102 are urged against the plurality of reaction plates 104 causing engagement of clutch assembly 124 and the transferring of power from flywheel 138 to drive driveshaft 30. When the pressurized fluid is released from chamber 176, clutch assembly 14 is urged into its released condition due to the biassing of coil springs 188.

Brake assembly 12 operates to stop driveshaft 30 from rotating with respect to flywheel 138 and clutch assembly 14 operates to cause driveshaft 30 to be rotated by flywheel 138. Because these operations are opposite to each other, it is necessary to coordinate the application and release of brake assembly 12 with the engagement and release of clutch assembly 14 to insure that there is no overlap between the two assemblies. The present invention provides the unique coordination of operation of brake assembly 12 and clutch assembly 14 by designing the two assemblies 12 and 14 such that the coordination of their operation are designed into the assemblies. The plurality of coil springs 90 and the plurality of coil springs 188 are designed to be generally identical in strength and number. Thus the urging force that applies brake assembly 12 and the urging force that releases clutch assembly 14 is generally identical. In addition, the size and dimensions of chamber 80 are generally identical to the size and dimensions of chamber 176. Thus when the same pressurized fluid is supplied to both chambers 80 and 176 simultaneously, brake assembly 12 will release simultaneously to the engagement of clutch assembly 14. In a similar manner, the release of clutch assembly 14 and the application of brake assembly 12 will also occur simultaneously with the simultaneous release of pressurized fluid from chambers 80 and 176 and the reaction caused by springs 90 and 188.

While the above detailed description describes the preferred embodiment of the present invention, it should be understood that the present invention is susceptible to modification, variation and alteration without deviating from the scope of the subjoined claims.

## Claims

1. An apparatus in combination with an oil shear clutch unit and an oil shear brake unit;
said oil shear brake unit (12) being disposed on a first side of a flywheel of said apparatus, said oil shear brake unit comprising:
support means (50) for securing said brake unit to a non-rotatable member of said apparatus;
input means (30) for receiving rotary motion from said apparatus, said input means rotatable with respect to said support means (50);
selectively operable brake means for prohibiting rotation of said input means (30), said brake means including a plurality of interleaved first friction disks (22,24) alternately splined, respectively, to said support means (50) and said input means (30), said brake means being movable between an applied condition and a released condition; and
a brake biasing member (90) for providing a first load for urging said brake means into said applied condition, said brake means defining a brake chamber (80) for accepting a pressurized fluid to overcome said first load and move said brake means into said released condition;
said oil shear clutch unit (14) being disposed on a second side of said flywheel of said apparatus, said oil shear clutch unit comprising;
means (130) for anchoring said clutch unit to said flywheel of said apparatus;
output means (30) for receiving rotary motion from said flywheel, said output means rotatable with said input means of said oil shear brake unit;
selectively operable clutch means for transmitting rotational motion of said anchoring means (130) to said output means (30) of said oil shear clutch unit, said clutch means including a plurality of interleaved second friction disks (102,104) alternately splined, respectively, to said anchoring means and said output means, said clutch means being movable between a disengaged condition and an engaged condition; and
a clutch biasing member (188) for providing a second load for urging said clutch means into said disengaged condition, said second load being generally equal to said first load, said clutch means defining a clutch chamber (176) for accepting said pressurized fluid to overcome said second load and move said clutch means into said engaged condition, said clutch chamber (176) having dimensions generally equal to said brake chamber (80);
wherein said clutch chamber (176) is separate from said brake chamber (80).

2. A combination oil shear clutch unit and brake unit;
support means (50) for securing said brake unit to a relatively non-rotatable member;
shaft means (30) for transmitting rotary motion;
selectively operable brake means including a plurality of interleaved first friction disks (22,24) for resisting rotation between said shaft means (30) and said support means (50), said brake means being movable between an applied condition and a released condition;
a brake biasing member (90) for providing a first load for urging said brake means into said applied condition, said brake means defining a brake chamber (80) for accepting a pressurized fluid to overcome said first load and move said brake means into said released condition;
means (130) for supporting said clutch unit in operative association with a flywheel;
selectively operable clutch means including a plurality of interleaved second friction disks (102,104) for operatively connecting said flywheel with said shaft means (30), said clutch means being movable between a disengaged condition and an engaged condition; and
a clutch biasing member (188) for providing a second load for urging said clutch means into said disengaged condition, said second load being generally equal to said first load, said clutch means defining a clutch chamber (176) for accepting said pressurized fluid to overcome said second load and move said clutch means into said engaged condition, said clutch chamber (176) having dimensions generally equal to said brake chamber (80);
wherein said clutch chamber (176) is separate from said brake chamber (80).

## Patentansprüche

1. Vorrichtung in Kombination mit einer Ölscherkupplungseinheit und einer Ölscherbremseinheit;
wobei die Ölscherbremseinheit (12) auf einer ersten Seite eines Schwungrades der Vorrichtung angeordnet ist, und die Ölscherbremseinheit folgendes enthält:
ein Stützmittel (50) zur Befestigung der Bremseinheit an einem nicht rotierbaren Glied der Vorrichtung;
ein Eingangsmittel (30) zum Empfang einer Drehbewegung von der Vorrichtung, wobei das Eingangsmittel in Bezug auf das Stützmittel (50) rotierbar ist;
ein selektiv betreibbares Bremsmittel zur Verhinderung einer Rotation des Eingangsmittels (30), wobei das Bremsmittel eine Mehrzahl von verschachtelten ersten Reibscheiben (22, 24) enthält, die abwechselnd verkeilt sind, jeweils mit dem Stützmittel (50) und dem Eingangsmittel (30), und das Bremsmittel zwischen einem Betätigungszustand und einem Freigabezustand bewegbar ist; und
ein Bremsvorspannglied (90) zur Bereitstellung einer ersten Last zum Drängen des Bremsmittels in den Betätigungszustand, wobei das Bremsmittel eine Bremskammer (80) definiert zur Aufnahme eines mit Druck beaufschlagten Fluids zur Überwindung der ersten Last und Bewegung des Bremsmittels in den Freigabezustand;
wobei die Ölscherkupplungseinheit (14) auf einer zweiten Seite des Schwungrades der Vorrichtung angeordnet ist, und die Ölscherkupplungseinheit folgendes enthält:
ein Mittel (130) zum Verankern der Kupplungseinheit mit dem Schwungrad der Vorrichtung;
ein Ausgangsmittel (30) zum Empfang einer Drehbewegung von dem Schwungrad, wobei das Ausgangsmittel mit dem Eingangsmittel der Ölscherbremseinheit rotierbar ist;
ein selektiv betreibbares Kupplungsmittel zur Übertragung der Drehbewegung des Verankermittels (130) an das Ausgangsmittel (30) der Ölscherkupplungseinheit, wobei das Kupplungsmittel eine Mehrzahl von verschachtelten zweiten Reibscheiben (101, 104) enthält, die abwechselnd verkeilt sind, jeweils mit dem Verankermittel und dem Ausgangsmittel, und das Kupplungsmittel zwischen einem Nichteingriffszustand und einem Eingriffszustand bewegbar ist; und
ein Kupplungsvorspannglied (188) zur Bereitstellung einer zweiten Last zum Drängen des Kupplungsmittels in den Nichteingriffszustand, wobei die zweite Last im allgemeinen gleich der ersten Last ist, das Kupplungsmittel eine Kupplungskammer (176) definiert zur Aufnahme des druckbeaufschlagten Fluids zur Überwindung der zweiten Last und Bewegung des Kupplungsmittels in den Eingriffszustand, und die Kupplungskammer (176) Abmessungen aufweist, die im allgemeinen gleich denen der Bremskammer (80) sind;
wobei die Kupplungskammer (176) von der Bremskammer (80) getrennt ist.

2. Kombinationsölscherkupplungseinheit und -bremseinheit;
ein Stützmittel (50) zur Befestigung der Bremseinheit an einem relativ nicht rotierbaren Glied;
ein Wellenmittel (30) zur Übertragung von Drehbewegung;
ein selektiv betreibbares Bremsmittel, das eine Mehrzahl von verschachtelten ersten Reibscheiben (22, 24) enthält, zum Widerstand leisten gegen eine Rotation zwischen dem Wellenmittel (30) und dem Stützmittel (50), wobei das Bremsmittel zwischen einem Betätigungszustand und einem Freigabezustand bewegbar ist;
ein Bremsvorspannglied (90) zur Bereitstellung einer ersten Last zum Drängen des Bremsmittels in den Betätigungszustand, wobei das Bremsmittel eine Bremskammer (80) definiert, zur Aufnahme eines mit Druck beaufschlagten Fluids zur Überwindung der ersten Last und Bewegung des Bremsmittels in den Loslasszustand;
ein Mittel (130) zum Stützen der Kupplungseinheit in operativer Zusammenarbeit mit einem Schwungrad;
ein selektiv betreibbares Kupplungsmittel, das eine Mehrzahl von verschachtelten zweiten Reibscheiben (102, 104) enthält zur operativen Verbindung des Schwungrads mit dem Wellenmittel (30), wobei das Kupplungsmittel zwischen einem Nichteingriffszustand und einem Eingriffszustand bewegbar ist; und
ein Kupplungsvorspannglied (188) zur Bereitstellung einer zweiten Last zum Drängen des Kupplungsmittels in den Nichteingriffszustand, wobei die zweite Last im allgemeinen gleich der ersten Last ist, das Kupplungsmittel eine Kupplungskammer (176) definiert zur Aufnahme des druckbeaufschlagten Fluids zur Überwindung der zweiten Last und Bewegung des Kupplungsmittels in den Eingriffszustand, und die Kupplungskammer (176) Abmessungen aufweist, die im allgemeinen gleich denen der Bremskammer (80) sind;
wobei die Kupplungskammer (176) von der Bremskammer (80) getrennt ist.

## Revendications

1. Appareil en combinaison avec un embrayage en bain d'huile et un frein en bain d'huile;
ledit frein en bain d'huile (12) étant disposé d'un premier côté d'un volant dudit appareil, ledit frein en bain d'huile comprenant :
un moyen de support (50) pour assujettir ledit frein à un élément non rotatif dudit appareil;
un moyen d'entrée (30) destiné à recevoir un mouvement de rotation provenant dudit appareil, ledit moyen d'entrée pouvant tourner par rapport audit moyen de support (50);
un moyen de freinage actionnable sélectivement pour empêcher la rotation dudit moyen d'entrée (30), ledit moyen de freinage comportant une pluralité de premiers disques de friction intercalés (22, 24) alternativement clavetés, respectivement, audit moyen de support (50) et audit moyen d'entrée (30), ledit moyen de freinage étant mobile entre un état appliqué et un état relâché; et
un élément de poussée de frein (90) pour fournir une première charge pour mettre ledit moyen de freinage dans ledit état appliqué, ledit moyen de freinage définissant une chambre de frein (80) pour accepter un fluide sous pression pour surmonter ladite première charge et déplacer ledit moyen de freinage pour le mettre dans ledit état relâché;
ledit embrayage en bain d'huile (14) étant disposé d'un second côté dudit volant dudit appareil, ledit embrayage en bain d'huile comprenant :
un moyen (130) pour fixer ledit embrayage sur ledit volant dudit appareil;
un moyen de sortie (30) pour recevoir un mouvement de rotation provenant dudit volant, ledit moyen de sortie pouvant tourner avec ledit moyen d'entrée dudit frein en bain d'huile;
un moyen d'embrayage actionnable sélectivement pour transmettre le mouvement de rotation dudit moyen de fixation (130) audit moyen de sortie (30) dudit embrayage en bain d'huile, ledit moyen d'embrayage étant mobile entre un état débrayé et un état embrayé; et
un élément de poussée d'embrayage (188) pour fournir une seconde charge pour mettre ledit moyen d'embrayage dans ledit état débrayé, ladite seconde charge étant généralement égale à ladite première charge, ledit moyen d'embrayage définissant une chambre d'embrayage (176) pour accepter ledit fluide sous pression pour surmonter ladite seconde charge et déplacer ledit moyen d'embrayage pour le mettre dans ledit état embrayé, ladite chambre d'embrayage (176) ayant des dimensions généralement égales à celles de ladite chambre de frein (80);
ladite chambre d'embrayage (176) étant séparée de ladite chambre de frein (80).

2. Combinaison embrayage en bain d'huile - frein en bain d'huile;
un moyen de support (50) pour assujettir ledit frein à un élément relativement non rotatif;
un moyen formant arbre (30) pour transmettre un mouvement de rotation;
un moyen de freinage actionnable sélectivement comportant une pluralité de premiers disques de friction intercalés (22, 24) pour résister à la rotation entre ledit moyen formant arbre (30) et ledit moyen de support (50), ledit moyen de freinage étant mobile entre un état appliqué et un état relâché; et
un élément de poussée de frein (90) pour fournir une première charge pour mettre ledit moyen de freinage dans ledit état appliqué, ledit moyen de freinage définissant une chambre de frein (80) pour accepter un fluide sous pression pour surmonter ladite première charge et déplacer ledit moyen de freinage pour le mettre dans ledit état relâché;
un moyen (130) pour supporter ledit embrayage en association fonctionnelle avec un volant;
un moyen d'embrayage actionnable sélectivement comportant une pluralité de seconds disques de friction intercalés (102, 104) pour connecter de manière fonctionnelle ledit volant audit moyen formant arbre (30), ledit moyen d'embrayage étant mobile entre un état débrayé et un état embrayé; et
un élément de poussée d'embrayage (188) pour fournir une seconde charge pour mettre ledit moyen d'embrayage dans ledit état débrayé, ladite seconde charge étant généralement égale à ladite première charge, ledit moyen d'embrayage définissant une chambre d'embrayage (176) pour accepter ledit fluide sous pression pour surmonter ladite seconde charge et déplacer ledit moyen d'embrayage pour le mettre dans ledit état embrayé, ladite chambre d'embrayage (176) ayant des dimensions généralement égales à celles de ladite chambre de frein (80);
ladite chambre d'embrayage (176) étant séparée de ladite chambre de frein (80).
